# EUROPÄISCHE PATENTSCHRIFT

(11) **EP 2 815 879 B1**
(45) Veröffentlichungstag und Bekanntmachung des Hinweises auf die Patenterteilung: **09.10.2024**
(21) Anmeldenummer: 14183262.6
(22) Anmeldetag: 02.09.2014
(51) Int. Cl.: B32B 5/18, B32B 27/32

(54) **POLYETHYLEN-COEXTRUSIONSFOLIE**
POLYETHYLENE COEXTRUSION FILM
FEUILLE DE COEXTRUSION EN POLYÉTHYLÈNE

(43) Veröffentlichungstag der Anmeldung: 24.12.2014
(73) Patentinhaber: Mondi AG, 1030 Wien (AT)
(72) Erfinder: Perick, Matthias, 48683 Ahaus-Altstätte (DE)
(74) Vertreter: Lorenz, Bernd Ingo Thaddeus

(56) Entgegenhaltungen:
- DE-A1- 102011 051 193
- DE-A1- 102012 108 705
- JP-A- 2000 238 875
- JP-A- 2004 009 522
- US-A- 6 096 793

## Beschreibung

Die Erfindung betrifft das technische Gebiet von mehrschichtigen Kunststofffolien mit zumindest einer aufgeschäumten Folienschicht.

Speziell beschäftigt sich die Erfindung mit einer Polyethylen-Coextrusionsfolie mit einer Dicke zwischen 20 µm und 250 µm umfassend eine aufgeschäumte, Partikel enthaltende Kernschicht zwischen einer ersten ungeschäumten heißsiegelbaren Außenschicht und einer zweiten ungeschäumten Außenschicht.

Die Polyethylen-Coextrusionsfolie ist insbesondere für die Herstellung von Verpackungen geeignet, wobei eine solche Verpackung aufgrund der ersten heißsiegelbaren Außenschicht der Polyethylen-Coextrusionsfolie durch Heißsiegeln geformt werden kann, wobei entweder ein Folienzuschnitt oder eine Endlosbahn durch Falten zu einer Verpackung geformt wird oder zumindest zwei Folienzuschnitte oder zwei Folienbahnen durch Heißsiegelnähte verbunden werden.

Die Polyethylen-Coextrusionsfolie kann dabei sowohl bei einem sogenannten FFS-Verfahren (Form Fill and Seal) eingesetzt werden, bei dem eine beutelförmige Verpackung unmittelbar bei dem Verpacken des Füllgutes gebildet wird, als auch bei der Herstellung vorgefertigter Verpackungen, die dann nachträglich befüllt werden.

Darüber hinaus kann die Polyethylen-Coextrusionsfolie auch als Deckfolie bei einer Schalenverpackung, als Etikett oder dergleichen eingesetzt werden.

Das Aufschäumen einer Folienschicht kann aus verschiedenen Gründen erfolgen. Zunächst ergibt sich bei einem Aufschäumen bezogen auf die resultierende Dicke der Folie ein geringeres Flächengewicht und damit eine Materialersparnis. Gerade in Kombination mit weiteren ungeschäumten Folienschichten ergibt sich bezogen auf die eingesetzte Menge an Kunststoff in der Regel auch eine Verbesserung der mechanischen Eigenschaften durch die größere Dicke. Wenn beispielsweise gemäß dem Oberbegriff des Patentanspruches 1 eine aufgeschäumte Kernschicht mit ungeschäumten Deckschichten kombiniert wird, ergibt sich eine Art Sperrholzeffekt wobei die durch die Volumenzunahme der Kernschicht gegenüber einer ungeschäumten Ausgestaltung weiterer auseinander liegenden Außenschichten weniger leicht gegeneinander verformt werden können. Darüber hinaus werden durch das Aufschäumen zumindest einer Folienschicht auch die weiteren physikalischen Eigenschaften der resultierenden Coextrusionsfolie beeinflusst.

Eine Polyethylen-Coextrusionsfolie mit den Merkmalen des Oberbegriffs des Patenanspruches 1 ist aus JP 2004 009 522 A bekannt.

Gemäß CA 1 145 724 A1, EP 0 512 740 B1, JP 2004-91024 A, EP 1 761 437 A1, JP 2007-230637 A und DE 10 2011 051 193 A1 wird eine aufgeschäumte Folienschicht als mechanischer Puffer eingesetzt, um die Durchstichfestigkeit zu erhöhen oder mechanische Verformungen durch das Füllgut in einem gewissen Maße auszugleichen.

Zumindest eine aufgeschäumte Folienschicht kann auch für eine Wärmeisolation genutzt werden. Entsprechende Ansätze sind aus JP 2001-130586 A, US 6 913 389 B2, KR 2004-0005806 und KR 2004-0007381 bekannt.

Darüber hinaus kann eine geschäumte Folienschicht in einer Folie auch eine Schwächung bewirken, welche ein Aufreißen in einer gewünschten Weise begünstigt. Durch die geringere Dichte und die Freiräume innerhalb der zumindest einen geschäumten Folienschicht kann diese in ihrer Dickenrichtung relativ leicht zerrissen werden. Je nach konkreter Ausgestaltung kann das Aufschäumen auch die Schichttrennung gegenüber einer angrenzenden Folienschicht erleichtern, wobei diese Eigenschaften für die Herstellung von Aufreißverpackungen genutzt werden können. Darüber hinaus ergibt sich auch bei einem Zerreißen der Folie senkrecht zu ihrer Dicke, insbesondere bei einer Rissausbreitung entlang der Produktionsrichtung, eine Schwächung durch das Aufschäumen. Eine ausgeprägte Anisotropie kann abhängig von dem Herstellungsprozess auch darauf zurückgeführt werden, dass die bei dem Aufschäumen gebildeten Poren oder Hohlräume in einer Produktionsrichtung ausgerichtet sind, so dass entlang der Längsrichtung dieser Hohlräume oder Poren (also entlang der Produktionsrichtung) ein Zerreißen besonders leicht erfolgen kann. Die Nutzung von geschäumten Folienschichten zur Einstellung definierter Aufreißeigenschaften ist beispielsweise in GB 2 110 215 B, US 4 762 230, US 4 781 294, EP 673 756 A1, JP 3823967 und DE 20 2005 002 615 U1 beschrieben.

Das Aufschäumen von zumindest einer Folienschicht führt auch zu einer erhöhten Rauigkeit oder Welligkeit der Folienoberfläche, wobei dieser Effekt gemäß DE 2 038 557 A1, DE 37 22 139 C2, DE 196 53 608 B4, JP 2001-055242 A und EP 1 237 751 B1 B1 als Vorteil genutzt wird. Allerdings ist die durch das Aufschäumen resultierende Welligkeit oder Rauigkeit der Oberfläche in vielen Fällen auch unerwünscht, wenn beispielsweise bei Verpackungen eine möglichst gleichmäßige, glatte und ein hochwertiges Erscheinungsbild aufweisende Oberfläche angestrebt wird.

Als weiterer Effekt einer aufgeschäumten Folienschicht ist aus der Praxis bekannt, dass die entsprechende Folie eine höhere Trübung und Opazität aufweist. Beispielsweise kann für die Bereitstellung einer nicht durchsichtigen oder nur durchscheinenden Folie durch ein Aufschäumen auch der Einsatz von Farbpartikeln reduziert werden. Die Erhöhung der Opazität und die Nutzung dieses Effektes werden in der EP 83 167 B1 beschrieben.

Zur Herstellung von Folien mit zumindest einer geschäumten Folienschicht sind verschiedene Verfahren bekannt. Das Aufschäumen kann insbesondere durch eine chemische Reaktion oder einen physikalischen Prozess erfolgen. Beispielsweise können bei einer Extrusion in der Polymerschmelze enthaltene Substanzen zur Bildung eines Gases verdampfen oder reagieren. In diesem Zusammenhang ist es auch möglich, Mikrokugeln in die Polymerschmelze einzubringen, welche innerhalb eines aufschmelzbaren Mantels ein Treibmedium aufweisen.

Bei einem physikalischen Schäumen wird ein Treibmittel in dem Extruder der aufgeschmolzenen Kunststoffmasse unter hohem Druck zugegeben. Als Treibmittel sind beispielsweise Wasser, Stickstoff oder Kohlendioxid geeignet.

Besonders gleichmäßige gute mechanische Eigenschaften werden dann erreicht, wenn die aufgeschäumte Schicht eine besonders feinzellige Schaumstruktur aufweist, die beispielsweise durch das sogenannte MuCell-Verfahren gebildet werden kann. Vorrichtungen zur Durchführung des Verfahrens bzw. zum Nachrüsten klassischer Extruder werden von der Drexel Inc., USA vertrieben. Das MuCell-Verfahren wird insbesondere in US 5 866 053, US 6 051 174, EP 923 443 B1, EP 1 275 485, EP 377 650 A1, EP 580 777 B1, US 6 231 942, EP 996 536 A2, EP 1 040 158 B2, EP 1 131 387 B1, EP 1 283 767 B1, EP 1 337 387 A1, EP 1 539 868 B1, EP 1 337 387 A1 und EP 1 575 763 B1 beschrieben. Die vorliegende Erfindung bezieht sich insbesondere auf Polyethylen-Coextrusionsfolien, bei denen die aufgeschäumte Kernschicht gemäß dem beschriebenen MuCell-Verfahren gebildet ist.

Der Schmelze für die aufzuschäumende Kernschicht wird dabei während der Extrusion ein Treibmittel beigegeben, welches während der Extrusion bzw. unmittelbar nach dem Austritt aus dem Extrusionsspalt ein Aufschäumen bewirkt. Das zuvor unter Druck der Schmelze beigegebene Treibmittel erfährt bei dem Austritt aus dem Düsenspalt der Coextrusionsdüse eine schlagartige Entspannung. Das Treibmittel liegt innerhalb des Extruders üblicherweise als überkritisches Fluid vor, welches die Inkompressibilität einer Flüssigkeit und die Lösungseigenschaften eines Gases vereint. Das Treibmittel geht in der Polymerschmelze in Lösung und bildet dort verteilt ein Einphasensystem mit der Kunststoffschmelze. Durch einen schnellen Druckabfall beim Austritt aus der Extrusionsdüse bilden sich in der Polymerschmelze Nukleierungskeime. Das Gas löst sich aus der Schmelze heraus, wobei eine sehr feine, gleichmäßige Schaumstruktur gebildet wird. Die Partikel in der Kernschicht können die Bildung besonders vieler kleiner Nukleierungskeime begünstigen. Die Partikel dienen also im Rahmen der Erfindung nicht oder zumindest nicht ausschließlich als günstiges Volumenmaterial, sondern werden auch als funktioneller Bestandteil zur Verbesserung der Folieneigenschaften, nämlich für die Ausbildung besonders vieler und kleiner Hohlräume bzw. Zellen genutzt. Die Partikel können dennoch auch als Nukleierungsmittel bezeichnet werden.

Um eine möglichst gleichmäßige, feine Ausbildung von Hohlräumen bzw. Poren zu ermöglichen, hat es sich als vorteilhaft erwiesen, den Löslichkeitsdruck in der Schmelze möglichst lange auf einem hohen Niveau zu halten, um dann erst unmittelbar bei dem Austritt der Schmelze aus einer Extrusionsdüse einen schlagartigen Druckabfall zu erreichen. Während Extrusionsdüsen für eine Blasfolienextrusion oder Breitschlitz-Extrusion sich häufig kegelförmig erweitern oder gerade verlaufen, kann bei einem Aufschäumen im Rahmen eines MuCell-Verfahrens gerade eine Verengung des Düsenspaltes unmittelbar am Ende des Spaltes vorteilhaft sein, um den Druck der Schmelze möglichst lange auf einem hohen Niveau zu halten und einen möglichst steilen Druckabfall zu erreichen. Bei einem zu engen Spalt tritt jedoch ein übermäßig hoher Widerstand bei der Extrusion auf, wobei auch bei einer mehrschichtigen Coextrusion mit einer aufgeschäumten Kernschicht und ungeschäumten Außenschichten bei einem partiellen Abreißen des Schmelzeflusses Ungleichmäßigkeiten in der Struktur auftreten können. Entsprechende technische Lösungen sind aus US 2012/228793 A und WO 2013/148841 A bekannt.

Weitere Verfahren zur Herstellung einer Folie oder eines Kunststoffkörpers mit zumindest einer aufgeschäumten Schicht sind des Weiteren aus US 4 473 665, US 4 522 675, EP 580 777 B1, EP 843 246 B1, TW 384271, US 6 403 663 B1, EP 1 189 978 B1, US 7 341 683 B2, EP 1 857 501 A1 und EP 1 888 676 A2 bekannt.

Verschiedene Extrusionsvorrichtungen sind Gegenstand von EP 1 075 921 B1 und EP 1 719 600 A2.

Die Druckschriften US 4 533 578, US 4 657 811, EP 237 977 B1, US 5 000 992, EP 5 553 522 A1, JP 11079192, US 6 096 793, EP 1 088 022 B1, JP 2002-154555, EP 1 297 067 B1, EP 1 646 677 B1, JP 2006-027185 A, JP 2007-045047 A, JP 2007-045046 A, EP 1 857 501 A1, EP 1 973 733 B1, EP 2 043 857 A2, WO 2008/100501 A2, WO 2009/155326 A1, EP 2 258 545 A1, JP 2013-111811 A, EP 2 668 036 A1, KR 2013-0100597 A und WO 2013/179947 A1 und DE 102012108705 A1 betreffen weitere Folien oder andere Kunststoffgegenstände mit einer geschäumten Schicht oder deren Herstellung.

Wie eingangs erläutert, betrifft die vorliegende Erfindung konkret eine Polyethylen-Coextrusionsfolie, insbesondere für Verpackungen, mit einer Dicke zwischen 20 µm und 250 µm umfassend eine aufgeschäumte, Füllstoff enthaltende Kernschicht zwischen einer ersten ungeschäumten heißsiegelbaren Außenschicht und einer zweiten ungeschäumten Außenschicht. Die Polyethylen-Coextrusionsfolie kann insbesondere mit dem zuvor beschriebenen MuCell-Verfahren gefertigt sein, wobei eine Blasfoliencoextrusion bevorzugt ist.

Durch die aufgeschäumte Kernschicht ergibt sich bei bekannten Polyethylen-Coextrusionsfolien mit den eingangs beschriebenen Merkmalen der Nachteil, dass die Außenschichten durch die darunter liegende Kernschicht mit blasenförmigen Hohlräumen und Poren uneben ist, wodurch das optische Erscheinungsbild beeinträchtigt wird.

Vor diesem Hintergrund liegt der vorliegenden Erfindung die Aufgabe zugrunde, eine Polyethylen-Coextrusionsfolie anzugeben, welche einfach herzustellen ist und dabei an der Oberfläche eine geringere Welligkeit bzw. Rauigkeit aufweisen.

Gegenstand der Erfindung und Lösung der Aufgabe ist eine Polyethylen-Coextrusionsfolie gemäß Patentanspruch 1.

Die Schmelze-Massefließrate (MFR) dient zur Charakterisierung des Fließverhaltens eines thermoplastischen Kunststoffes bei vorgegebenen Druck- und Temperaturbedingungen. Die Schmelze-Massefließrate wird häufig als Vergleichszahl herangezogen, um die Fließeigenschaften von verschiedenen Kunststoffen zu charakterisieren. Sie ist gemäß DIN ISO EN 1133 definiert als die Masse an Kunststoff, welche in 10 min bei vorgegebener Temperatur und vorgegebenem Druck durch eine kapillare festgelegte Abmessung fließt. Üblicherweise nimmt die Viskosität eines thermoplastischen Kunststoffes mit der Kettenlänge der Polymere sowie mit dem Grad der Verzweigung zu, wodurch entsprechend die Schmelze-Massefließrate abnimmt.

Gemäß der vorliegenden Erfindung ist die Kernschicht aus Partikeln und der Polymerkomponente auf der Basis von Polyethylen und gegebenenfalls noch weiteren Verarbeitungshilfsmitteln mit üblicherweise einem Anteil von weniger als 10 Gew.-% gebildet. Die gesamte Polymerkomponente auf der Basis von Polyethylen weist dabei erfindungsgemäß eine Schmelze-Massefließrate (MFR) von mehr als 6 g/10 min bei 190 °C und 2,16 kg auf und ist damit vergleichsweise dünnflüssig. Gerade im Zusammenhang mit den erfindungsgemäß vorgesehenen Partikeln können sich in der Kernschicht bei der angegebenen Schmelze-Massefließrate bei der Herstellung nach dem Austritt aus dem Spalt einer Coextrusionsdüse sehr gleichmäßig verteilt kleine Hohlräume bilden, wobei die während des Extrusionsprozesses nach dem Austritt aus der Extrusionsdüse relativ dünnflüssige Kernschicht zwischen den beiden Außenschichten angeordnet ist, wodurch nach außen ein Einschluss der Kernschicht erfolgt. Aufgrund der hohen Schmelze-Massefließrate von mehr als 5 g/10 min, vorzugsweise mehr als 6 g/10 min, weiter bevorzugt mehr als 8 g/10 min und besonders bevorzugt mehr als 10 g/ 10 min bei 190 °C und 2,16 kg herrschen jedoch unmittelbar nach der Extrusion in der gesamten Kernschicht relativ gleichmäßige Bedingungen, welche ein besonders gleichmäßiges Aufschäumen begünstigen.

Insbesondere wird im Rahmen der Erfindung auch erreicht, dass die Außenschichten im Vergleich zu bekannten Polyethylen-Coextrusionsfolien mit einer aufgeschäumten Kernschicht eine geringe Welligkeit und Rauigkeit an den Oberflächen der Außenschichten aufweisen.

Erfindungsgemäß ist bei der Bestimmung der Schmelze-Massefließrate die gesamte Polymerkomponente der Kernschicht zugrunde zu legen. Wenn die Kernschicht also beispielsweise unterschiedliche Polyethylen-Typen aufweist, ist die Schmelze-Massefließrate für die entsprechende Polymermischung zu bestimmen.

Der Anteil der Partikel in der Kernschicht beträgt zwischen 5 und 50 Gew.-%, vorzugsweise zwischen 10 und 30 Gew.-%.

Wie bereits zuvor beschrieben, dienen die erste Außenschicht und die zweite Außenschicht bei der Coextrusion und bei dem Aufschäumen der Kernschicht als eine Art Begrenzung, welche auch hinsichtlich der Expansion der Kernschicht einen gewissen Gegendruck aufbauen. Vorzugsweise weisen die erste Außenschichten eine deutlich höhere Viskosität und damit eine deutlich geringere Schmelze-Massefließrate gemäß DIN ISO EN 1133 bei 190 °C und 2,16 kg auf. Wenn die erste und die zweite Außenschicht jeweils als Polymerkomponente ein Polyethylen oder eine Mischung auf der Basis von Polyethylen aufweisen, liegt die Schmelze-Massefließrate (MFR) der beiden Polymerkomponenten jeweils vorzugweise unter 3 g/10 min, weiter bevorzugt unter 2 g/10 min und besonders bevorzugt unter 1 g/10 min.

Mit anderen Worten beträgt das Verhältnis der Schmelze-Massefließrate der Polymerkomponente der Kernschicht gegenüber der Schmelze-Massefließrate der Polymerkomponenten der beiden Außenschichten bevorzugt etwa 2, weiter bevorzugt zumindest 3 und besonders bevorzugt zumindest 6. Ohne weiteres können im Rahmen der Erfindung auch Verhältnisse von mehr als 10 erreicht werden. Durch das auf diese Weise gebildete Verhältnis wird deutlich, dass die beiden Außenschichten deutlich viskoser als die Kernschicht sind. Unter Berücksichtigung dieser Vorgaben konnten im Rahmen von orientierenden Versuchen Folien mit relativ gleichmäßiger, ebener Oberfläche gebildet werden. Es wird angenommen, dass dies einerseits darauf zurückzuführen ist, dass die beiden Außenschichten mit einer geringen Schmelze-Massefließrate unmittelbar bei der Extrusion einen erhöhten Gegendruck bei der Expansion der Kernschicht bewirken, wobei andererseits auch die vergleichsweise viskosen Außenschichten durch die Ausbildung einzelner Hohlräume und Blasen in der Kernschicht weniger stark verformt werden können. Die Außenschichten sind also gleichsam zu zähflüssig, um ausgehend von einer im Wesentlichen ebenen Ausrichtung stark verformt werden zu können.

Die erste heißsiegelbare Außenschicht und die zweite Außenschicht können Polymermischungen mit einer gleichen oder in etwa gleichen Schmelze-Massefließrate aufweisen, um wie zuvor beschrieben einen in etwa übereinstimmenden Gegendruck bei der Expansion der Kernschicht zu bewirken.

Gemäß einer alternativen Ausgestaltung der Erfindung ist vorgesehen, dass die erste, heißsiegelbare Außenschicht eine höhere Schmelze-Massefließrate als die zweite Außenschicht aufweist. Die als Siegelschicht vorgesehene erste Außenschicht wird häufig innenliegend angeordnet, so dass dort eine gewisse, leichte Welligkeit hingenommen werden kann, während die zweite, üblicherweise außenliegende Außenschicht möglichst glatt sein soll. Die erste Außenschicht kann beispielsweise eine Schmelze-Massefließrate von 2 bis 3 g/10 min aufweisen, während die zweite Außenschicht eine Schmelze-Massefließrate von 1 g/10 min aufweist. Bei einer solchen asymmetrischen Einstellung der Schmelze-Massefließrate kann letztlich die Oberfläche der zweiten Außenschicht noch glatter ausgeführt werden, da sich bei dem Aufschäumen der Kernschicht die einzelnen Zellen stärker in Richtung der ersten Außenschicht ausbreiten und eher dort zu Unebenheiten führen.

Wie zuvor beschrieben, wird im Rahmen der Erfindung vorzugsweise das eingangs beschriebene MuCell-Verfahren für das Aufschäumen der Kernschicht eingesetzt, wobei in der Kernschicht eine Mikrozellenstruktur erzeugt wird. Die Mikrozellenstruktur ist charakterisiert durch eine Porenstruktur mit einer mittleren Porengröße von weniger als 100 µm, wobei die Porengröße auch im Bereich zwischen 0,1 µm und 10 µm liegen kann. Da die einzelnen Poren oder Hohlräume durch den Coextrusionsprozess in einer gewissen Weise in Produktionsrichtung ausgerichtet sein können, ist gerade das Volumen der geschlossenen Hohlräume der Kernschicht ein geeignetes charakteristisches Merkmal, wobei das Volumen vorzugsweise weniger als 50000 µm³, vorzugsweise weniger als 20000 µm³ und beispielsweise weniger als 5000 µm³ beträgt.

Wenn gemäß einer bevorzugten Ausgestaltung der Erfindung Stickstoff als Treibmittel für das physikalische Aufschäumen genutzt wird, weist die Kernschicht entsprechend geschlossene, mit Stickstoff gefüllte Hohlräume auf.

Der Grad des Aufschäumens kann durch die Menge des zugegebenen Treibmittels, die Viskosität der Polymerkomponenten von Kernschicht und Außenschichten sowie den Extrusionsbedingungen eingestellt werden. Vorzugsweise weist die Kernschicht eine Dichte zwischen 0,2 g/cm³ und 0,8 g/cm³ auf. Die Zunahme der Dicke der Kernschicht im Vergleich zu einer ungeschäumten Schicht mit der gleichen Polymermenge liegt also typischerweise zwischen etwa 20 % und 500 %, besonders bevorzugt zwischen etwa 40 % und 200 %, besonders bevorzugt zwischen 50 % und 120 %.

Die erfindungsgemäße Polyethylen-Coextrusionsfolie zeichnet sich gegenüber einer vollständig ungeschäumten Folie durch ein geringes Flächengewicht und damit durch einen geringeren Materialeinsatz aus, wobei durch eine geeignete Abstimmung der Schichtdicken der Polyethylen-Coextrusionsfolie ausreichende mechanische Eigenschaften hinsichtlich der Steifheit und Reißfestigkeit erreicht werden können. Vorzugsweise beträgt die Dicke der aufgeschäumten Kernschicht zwischen 30 % und 70 % der Gesamtdicke der gesamten Polyethylen-Coextrusionsfolie. Entsprechend weisen die beiden Außenschichten jeweils eine Dicke auf, welche zwischen etwa 15 % und 30 % der Gesamtdicke der Polyethylen-Coextrusionsfolie beträgt.

Orientierende Versuche haben gezeigt, dass die Qualität der Oberflächen der Außenschichten mit einer zunehmenden Schmelze-Massefließrate der Polymerkomponente der Kernschicht zunimmt, wobei jedoch in einem gewissen Maße eine Beeinträchtigung der mechanischen Eigenschaften der Polyethylen-Coextrusionsfolie resultieren kann.

Die Polymerkomponente der Kernschicht kann als Hauptbestandteil ein lineares Polyethylen, einschließlich Metallocen-Katalysatoren gewonnene Typen enthalten. In Betracht kommen lineare Polyethylene hoher (LHDPE), mittlerer (LMDPE) und niedriger (LLDPE) Dichte. Grundsätzlich kommen sämtliche bekannten linearen Typen von Polyethylenen, also Alpha-Olefin-Copolymeren auf der Basis von Polyethylen in Betracht. Bevorzugt sind Copolymere mit Hexen (C6) und Octen (C8).

Durch die beschriebenen verschiedenen Typen von linearem Polyethylen können die mechanischen Eigenschaften in einem weiten Bereich eingestellt werden. Insbesondere im Hinblick auf Verpackungen ist ein lineares Polyethylen niedriger Dichte häufig von Vorteil, um eine zu steife und spröde Ausgestaltung der Verpackung zu vermeiden.

Bevorzugt für die Polymerkomponente der Kernschicht ist jedoch auch eine Mischung, welche neben dem linearen Polyethylen, insbesondere einem linearen Polyethylen niedriger Dichte (LLDPE) zumindest ein weiteres Polyethylen niedriger Dichte enthält. Dabei kann es sich ohne Einschränkung um ein nicht lineares Polyethylen niedriger Dichte (LDPE) oder ein mit Metallocen-Katalysatoren gewonnenes lineares Polyethylen niedriger Dichte (mLLDPE) handeln. Auch im Rahmen dieser Ausgestaltungen ist lineares Polyethylen als Hauptbestandteil der Polymerkomponente der Kernschicht vorgesehen. Die Kernschicht kann beispielsweise aus 10 bis 30 Gew.-% Partikel einschließlich Verarbeitungshilfsmitteln, 10 bis 30 % Gew.-% LDPE oder mLLDPE und Rest LLDPE gebildet sein.

Die vorliegende Erfindung bezieht sich auf eine Polyethylen-Coextrusionsfolie, welche mit den beiden Außenschichten und der Kernschicht zumindest dreischichtig ausgeführt ist. Auch wenn grundsätzlich weitere Schichten vorhanden sein können ist eine dreischichtige Ausgestaltung bevorzugt, bei der also die Außenschichten unmittelbar an gegenüberliegenden Seiten an die Kernschicht angrenzen.

Die erste ungeschäumte, heißsiegelbare Außenschicht ermöglicht die Bildung einer Verpackung durch Heißsiegeln. Die erste Außenschicht ist also im Hinblick auf eine Verpackung üblicherweise innenliegend angeordnet.

Die zweite Außenschicht ist dagegen in Richtung einer Außenseite der Verpackung angeordnet, wobei die zweite Außenschicht entweder eine freiliegende Oberfläche bilden kann oder mit einer weiteren Deckfolie kaschiert ist. Die zweite Außenschicht kann beispielsweise durch Klebstoff mit einer Deckfolie kaschiert sein, welche ohne Einschränkung Polyethylenterephthalat (PET), biaxial orientiertes Polypropylen (BO-PP) oder auch Polyethylen enthalten kann, wobei im Rahmen der zuletzt genannten Variante auch eine insgesamt im Wesentlichen sortenreine Verpackungsfolie bereitgestellt werden kann.

Im Rahmen der Erfindung kann vorgesehen sein, dass zumindest eine der beiden Außenschichten Farbpartikel enthält, um insgesamt eine undurchsichtige Folie zu erhalten. Dabei kann auch ausgenutzt werden, dass die Kernschicht durch das Aufschäumen zumindest in einem gewissen Maße eingetrübt ist, so dass dann der Anteil von Farbpartikeln gegenüber einer ungeschäumten Coextrusionsfolie gegebenenfalls reduziert sein kann.

Auch wenn im Rahmen der Erfindung eine geringere Welligkeit und Oberflächenrauigkeit insbesondere an der Oberfläche der zweiten Außenschicht erreicht werden kann, kann die auch im Rahmen der Erfindung nicht vermeidbare Restwelligkeit aufgrund der aufgeschäumten Kernschicht bei einer glänzenden Oberfläche zu Beeinträchtigungen führen. Insbesondere kann bei einer glänzenden Oberfläche eine durch Lichtbrechung sichtbare Oberflächenrauhigkeit nicht in allen Fällen vermieden werden, welche in einem gewissen Maße an die Struktur einer Orangenhaut erinnert.

Überraschenderweise kann dieser Eindruck komplett vermieden werden, wenn die zweite Außenschicht matt ausgeführt wird, mit einer matten Folie kaschiert wird oder mit einer matten Beschichtung versehen wird. Auch wenn diese Maßnahmen die tatsächliche Unebenheit überhaupt nicht oder zumindest nicht wesentlich reduzieren, ist aufgrund der diffusen Lichtbrechung die Welligkeit nicht mehr sichtbar. Dies gilt erstaunlicherweise gerade für die bei einem Aufschäumen resultierende Struktur, welche bei einer glänzenden Oberfläche bei einem Benutzer den Eindruck von ungleichmäßigen Wellen oder Dellen hervorruft.

Vorzugsweise weist die Polyethylen-Coextrusionsfolie bei dem Einsatz von matten Rohstoffen für die zweite ungeschäumte Außenschicht oder bei einer Beschichtung der zweiten ungeschäumten Außenschicht mit einem Mattlack eine matte Oberfläche mit einem Reflektometerwert gemäß DIN 67530 bei einem Messwinkel von 85° von weniger als 40, vorzugsweise weniger als 30, insbesondere zwischen 10 und 25 auf. Entsprechend beträgt der Reflektometerwert gemäß DIN 67530 bei einem Messwinkel von 60° üblicherweise weniger als 30, vorzugsweise weniger als 20 und insbesondere zwischen 5 und 15. Bei einem Messwinkel von 20° beträgt der Reflektometerwert üblicherweise weniger als 10, vorzugsweise weniger als 5 und insbesondere zwischen 1 und 3.

Wenn gemäß einer alternativen Ausgestaltung der Erfindung die Polyethylen-Coextrusionsfolie an der zweiten Außenschicht als Kaschierschicht mit einer matten Folie verbunden ist, so ergeben sich die angegebenen Reflektometerwerte vorzugsweise an der Oberfläche der zusätzlich aufkaschierten Deckfolie.

Die Erfindung wird nachfolgend anhand von exemplarischen Ausführungsbeispielen erläutert.

Im Rahmen von orientierenden Versuchen wurden jeweils drei Rezepturen für die erste ungeschäumte, heißsiegelbare Außenschicht als Siegelschicht, die Kernschicht und die zweite ungeschäumte Außenschicht in Betracht gezogen.

Um eine Siegelschicht mit üblichen Siegeleigenschaften bereitzustellen, kann die erste Außenschicht aus einer Materialzusammenstellung A1 gebildet werden, welche Polyethylen mit einer Dichte zwischen 0,92 bis 0,94 g/cm³ aufweist, wobei insbesondere Mischungen von linearen und nicht linearen Polyethylen-Typen in Betracht kommen. Um eine niedrig siegelnde erste Außenschicht als Siegelschicht bereitzustellen, kann als Material A2 ein Polyethylen mit einer Dichte von 0,905 bis 0,917 g/cm³ (ULDPE) eingesetzt werden. Für eine sehr niedrig siegelnde Siegelschicht kann dagegen ein Polymermaterial A3 auf der Basis von Polyethylen mit einer Dichte von weniger als 0,905 g/cm³ eingesetzt werden.

Die Zusammenstellung der Kernschicht kann anhand der gewünschten Eigenschaften der Polyethylen-Coextrusionsfolie erfolgen.

Insbesondere zur Bildung vergleichsweise dicker Folien, bei denen eine geringfügig höhere Oberflächenrauigkeit in Kauf genommen werden kann und bei denen eine hohe Siegelnahtfestigkeit gewünscht wird, kann für die Kernschicht ein Material B1 mit 20 Gew.-% Talkum als Füllstoff und Rest LLDPE C8 mit einer Schmelze-Massefließrate von 6 bis 8 eingesetzt werden.

Für dünnere Folien mit einer verbesserten, geringeren Oberflächenrauigkeit und einer geringen Siegelnahtfestigkeit wird dagegen bevorzugt ein Material B2 mit 20 Gew.-% Talkum, 20 % LDPE und Rest LLDPE eingesetzt werden, wobei die beiden genannten Polyethylen-Typen eine Schmelze-Massefließrate zwischen 6 und 8 aufweisen, so dass erwartungsgemäß auch die Schmelze-Massefließrate der aus LLDPE und LDPE gebildeten Polymerkomponente entsprechende Werte aufweist.

Als drittes Material B3 ist eine Zusammenstellung von 20 % Talkum, 20 % mLLDPE mit einem MFI von 15 bis 20 und Rest LLDPE mit einem MFI von 6 bis 8 vorgesehen. Die Formulierung B3 ist sowohl für dünne als auch für dicke Folien geeignet und führt zu einer guten Siegelnahtfestigkeit und gute Oberflächeneigenschaften mit einer geringen Oberflächenrauigkeit. Gegenüber den Materialen B1 und B2 ergibt sich jedoch eine etwas schwierige Verfahrensführung bei der Coextrusion sowie einer Erhöhung der Materialkosten.

Die zweite ungeschäumte Außenschicht trägt zusammen mit der ersten ungeschäumten Außenschicht zu der Steifigkeit und Festigkeit der Polyethylen-Coextrusionsfolie bei. Folglich können die mechanischen Eigenschaften der gesamten Polyethylen-Coextrusionsfolie wesentlich durch das Material der zweiten Außenschicht beeinflusst werden. Als erstes Material C1 ist für die zweite Außenschicht eine Polyethylen-Mischung aus LDPE und LLDPE mit einer Dichte von etwa 0,92 g/cm³ vorgesehen.

Um eine erhöhte Steifigkeit zu erreichen, kann als Material C2 eine Mischung aus LDPE und LMDPE mit einer Dichte zwischen 0,925 und 0,935 g/cm³ eingesetzt werden. Schließlich kann eine vergleichsweise hohe Steifigkeit erreicht werden, wenn bei einem dritten Material C3 für die zweite ungeschäumte Außenschicht LDPE mit linearem Polyethylen hoher Dichte (LHDPE) abgemischt wird, wobei die dann resultierende Gesamtdichte der Mischung C3 zwischen 0,935 und 0,95 g/cm³ liegt.

Abhängig von dem jeweiligen Anforderungsprofil können die unterschiedlichen Rezepturen für die einzelnen Schichten frei miteinander kombiniert werden. Wenn beispielsweise eine vergleichsweise dünne Folie mit geringer Oberflächenrauigkeit gewünscht wird, welche bei geringer Siegelnahtfestigkeit niedrig siegelnd ist und eine hohe Steifigkeit aufweist, wird bevorzugt ein Schichtaufbau A2/B2/C3 eingesetzt. Selbstverständlich sind auch sämtliche andere Zusammenstellungen abhängig von den jeweiligen Anforderungen möglich.

Ein weiterer exemplarischer Schichtaufbau ist in der Tabelle 1 beschrieben. Die Dickenverhältnisse sind bezogen auf eine ungeschäumte Kernschicht angegeben. Bei einem Aufschäumen der Kernschicht ändert sich das Dickenverhältnis also entsprechend.

**Tabelle 1**

| | | *Schicht:* | | | erste Außenschicht | | | | Kernschicht | | | | zweite Außenschicht | | | |
|---|---|---|---|---|---|---|---|---|---|---|---|---|---|---|---|---|
| | | *Schichtdicke ungeschäumt:* | | | 29% | | | | 42% | | | | 29% | | | |
| | | *Komponenten:* | | | 57% mLLDPE-C8 Dichte: 0,925 g/cm³ / MFI 0,85 | | | | 77% LLDPE-C8 Dichte: 0,919 g/cm³ / MFI 6 | | | | 71% mLLDPE-C8 Dichte: 0,925 g/cm³ / MFI 0,85 | | | |
| | | | | | 28% LDPE Dichte: 0,929 g/cm³ / MFI 0,55 | | | | 20% Talkum-Batch (mit 60% Talkum) | | | | 26% LDPE Dichte: 0,923 g/cm³ / MFI 2 | | | |
| | | | | | 14% Weißbatch (mit 60% TiO2) | | | | 2% Gleitmittel-Antiblock-Batch | | | | 2% Gleitmittel-Antiblock-Batch | | | |
| | | | | | 1% Fluorpolymer-Batch (Verarbeitungshilfsmittel) | | | | 1% Thermostabilisator-Batch | | | | 1% Fluorpolymer-Batch (Verarbeitungshilfsmittel) | | | |

| | vorgegebene Dicke | gemessene Dicke (DIN 53370) | Flächengewicht | Kraft bei Bruch (DIN EN ISO 527-1) | | Dehnung bei Bruch (DIN EN ISO 527-1) | | Biegesteifigkeit 30° / 10 mm (DIN 53121) | | Reißfestigkeit nach Elemdorf (ISO 6383/2) | | Opazität (DIN 53146) | Reibungs-koeffizient COF (DIN EN ISO 8295) | | Siegelfestigkeit | Wasserdampf-Transmissionsrate WVTR (DIN 53122-1) |
|---|---|---|---|---|---|---|---|---|---|---|---|---|---|---|---|---|
| | ungeschäumt / geschäumt | - | - | Produktionsrichtung MD | Querrichtung CD | MD | CD | MD | CD | MD | CD | - | erste Außenschicht gegen erste Außenschicht | erste Außenschicht gegen Metall | 150 °C / 1,5s / 3 bar | x°C / x% RH |
| | µm/µm | µm | g/m² | N/Inch | N/Inch | % | % | mN | mN | mN | mN | % | 1 | 1 | N/Inch | g/(m²*day) |
| Vergleichsbeispiel | 100/100 | 98,9 | 94,7 | 73,9 | 69,1 | 692 | 919 | 25,4 | 36,6 | 6954 | 34519 | 78 | 0,15 | 0,20 | 44,5 | 2,8 |
| Folie 1 | 90/100 | 98,9 | 86,3 | 59,5 | 38,5 | 639 | 607 | 26,4 | 34,4 | 7168 | 28352 | 80 | 0,18 | 0,19 | 40,3 | 3,2 |
| Folie 2 | 80/100 | 103,3 | 75,5 | 41,4 | 27,0 | 451 | 500 | 25,6 | 35,5 | 1961 | 22267 | 77 | 0,16 | 0,23 | 35,2 | 4,9 |
| Folie 3 | 70/100 | 104,6 | 65,6 | 36,7 | 23,1 | 432 | 497 | 22,4 | 28,7 | 1398 | 13802 | 75 | 0,16 | 0,25 | 28,9 | 3,2 |
| Folie 4 | 60/100 | 105,1 | 59,0 | 27,1 | 13,2 | 293 | 125 | 19,7 | 17,7 | 999 | 10632 | 77 | 0,21 | 0,30 | 29,3 | 7,2 |
| Folie 5 | 100/110 | 107,7 | 97,4 | 65,9 | 41,8 | 672 | 643 | 34,3 | 44,4 | 6669 | 32578 | 81 | 0,16 | 0,21 | 42,3 | 2,9 |
| Folie 6 | 100/120 | 117,6 | 97,3 | 54,6 | 34,3 | 554 | 513 | 47,1 | 58,5 | 4286 | 31272 | 82 | 0,18 | 0,22 | 39,7 | 3,5 |
| Folie 7 | 100/130 | 127,7 | 97,1 | 55,0 | 30,3 | 497 | 486 | 54, 6 | 68,9 | 2321 | 29224 | 85 | 0,14 | 0,21 | 37,8 | 3,9 |
| Folie 8 | 100/140 | 138,0 | 98,3 | 48,3 | 28,1 | 465 | 419 | 65, 7 | 74,3 | 2067 | 23923 | 84 | 0,17 | 0,23 | 35,7 | 4,7 |

Ausgehend von der Materialzusammenstellung gemäß der Tabelle 1 wurde im Rahmen von Versuchen einerseits die Gesamtdicke bezogen auf den ungeschäumten Zustand (also das Flächengewicht) sowie der Aufschäumgrad der Kernschicht variiert. Dabei zeigt sich, dass durch das Aufschäumen die Biegesteifigkeit der Polyethylen-Coextrusionsfolie sowohl in Produktionsrichtung (MD) als auch in Querrichtung (CD) zunimmt.

Um gegenüber einer ungeschäumten Folie einen vorgegebenen Wert für die Steifigkeit zu erreichen, ist also ein geringerer Materialeinsatz notwendig. Durch das Aufschäumen nimmt die Siegelfestigkeit ab, wobei die Polyethylen-Coextrusionsfolie durch das Aufschäumen der Kernschicht auch leichter dehnbar ist, wobei die Beeinträchtigung der mechanischen Eigenschaften relativ gering ist. Zusätzlich nimmt die Wasserdampf-Transmissionsrate durch das Aufschäumen in einem gewissen Maße zu.

Die Eigenschaften der Materialzusammenstellung gemäß der Tabelle 1 ergeben sich aus der Tabelle 2.

In der ersten Spalte von Tabelle 2 ist die Dicke im aufgeschäumten Zustand der Dicke gegenübergestellt, die bei dem gleichen Materialeinsatz (ohne ein Aufschäummittel) resultieren würde. Die erste Spalte bezieht sich dabei auf Vorgabewerte. Das Vergleichsbeispiel betrifft demnach eine Folie, welche nicht aufgeschäumt ist. Aus den angegebenen Dicken für eine ungeschäumte sowie eine geschäumte Ausgestaltung ergibt sich der Grad, mit dem die Kernschicht aufgeschäumt ist.

Die zweite Spalte betrifft die tatsächlich bestimmte Dicke bei einer konkret gemäß den Vorgaben gebildeten Folie.

Die weiteren Spalten offenbaren verschiedene charakteristische Parameter.

Die erfindungsgemäße Polyethylen-Coextrusionsfolie soll insbesondere für Verpackungen eingesetzt werden, wobei jedoch auch andere Anwendungen denkbar sind. So kann die Polyethylen-Coextrusionsfolie beispielsweise als Etikettenfolie eingesetzt werden, wobei dann auch eine besonders glatte Oberfläche erwünscht ist. Das Gleiche gilt bei dem Einsatz der Polyethylen-Coextrusionsfolie als Oberflächenschutzfolie, wobei dann die aufgeschäumte Kernschicht zusätzlich auch eine mechanische Dämpfung bereitstellen kann und durch eine solche Pufferwirkung einen erhöhten Schutz bieten kann. Schließlich weist die erfindungsgemäße Polyethylen-Coextrusionsfolie auch gegenüber einer ungeschäumten Folie eine angenehmere, weichere Haptik auf, so dass sich eher ein Textil-Charakter ergibt. Die aufgeschäumte Folie kann deshalb auch in einem gewissen Maße als Ersatz für ein Textil eingesetzt werden oder zumindest textile Eigenschaften suggerieren, welche beispielsweise bei Kleidungsstücken, Einweg-Hygieneprodukten oder dergleichen wünschenswert sind.

Auch der Einsatz für ein Klebeband ist möglich, wobei dann durch die aufgeschäumte Kernschicht auch mechanische Spannungen in einem gewissen Maße ausgeglichen werden können.

Durch die relativ große Dicke bei einem geringen Flächengewicht kann die Polyethylen-Coextrusionsfolie auch als eine Art Siegel in Form eines Verschlussetikettes eingesetzt werden, um beispielsweise bei Schraubverschlüssen oder anderen Behältern einen originalen Verschluss anzuzeigen, wobei durch ein erstmaliges Öffnen ein solches Verschlussetikett zerrissen wird.

Schließlich kann die Polyethylen-Coextrusionsfolie aufgrund ihres gegenüber einer Folie weicheren Charakters auch als eine Art wasserbeständiger Ersatz für Papier eingesetzt werden, wobei gegebenenfalls in zumindest einer der Außenschichten Füllstoffe und Hilfsmittel eingesetzt werden können, um die Beschreibbarkeit zu verbessern. Als Zusätze zu diesem Zweck sind beispielsweise Kaolin und Kreide geeignet.

Schließlich besteht auch die Möglichkeit, bei dem Aufschäumprozess aktive Substanzen in die Hohlräume und Zellen einzubringen, welche dann über einen langen Zeitraum wirksam sind. Im Hinblick auf Verpackungen können dies beispielsweise spezielle Duftstoffe, Absorber oder dergleichen sein. Entsprechende Substanzen werden vorzugsweise mit dem Aufschäummittel während der Extrusion eingebracht.

## Patentansprüche

1. Polyethylen-Coextrusionsfolie, insbesondere für Verpackungen, mit einer Dicke zwischen 20 µm und 250 µm umfassend eine aufgeschäumte Kernschicht zwischen einer ersten ungeschäumten heißsiegelbaren Außenschicht und einer zweiten ungeschäumten Außenschicht, wobei die Kernschicht als Polymerkomponente ein Polyethylen oder eine Mischung auf der Basis von Polyethylen aufweist, welches bzw. welche eine Schmelze-Massefließrate (MFR) gemäß DIN ISO EN 1133 von mehr als 5 g/10 min bei 190 °C und 2,16 kg aufweist, **dadurch gekennzeichnet, dass** die Kernschicht und die ungeschäumten Außenschichten gemeinsam durch Blasfolien-Coextrusion gebildet sind und dass die Kernschicht Partikel enthält, wobei der Anteil der Partikel zwischen 5 und 50 Gew.-% liegt.

2. Polyethylen-Coextrusionsfolie nach Anspruch 1, **dadurch gekennzeichnet, dass** die erste und die zweite Außenschicht jeweils als Polymerkomponente ein Polyethylen oder eine Mischung auf der Basis von Polyethylen aufweisen, wobei die Polymerkomponenten der ersten Außenschicht sowie der zweiten Außenschicht jeweils eine Schmelze-Massefließrate (MFR) gemäß DIN ISO EN 1133 von weniger als 3 g/10 min, insbesondere weniger als 1 g/10 min bei 190 °C und 2,16 kg aufweisen.

3. Polyethylen-Coextrusionsfolie nach Anspruch 1 oder 2, **dadurch gekennzeichnet, dass** die erste Außenschicht eine höhere Schmelze-Massefließrate (MFR) als die zweite Außenschicht aufweist.

4. Polyethylen-Coextrusionsfolie nach einem der Ansprüche 1 bis 3, **dadurch gekennzeichnet, dass** die geschäumte Kernschicht geschlossene, mit Stickstoff oder Kohlendioxid gefüllte Hohlräume aufweist.

5. Polyethylen-Coextrusionsfolie nach einem der Ansprüche 1 bis 4, **dadurch gekennzeichnet, dass** die geschäumte Kernschicht geschlossene Hohlräume mit einem Volumen von weniger als 50000 µm³ aufweist.

6. Polyethylen-Coextrusionsfolie nach einem der Ansprüche 1 bis 5, **dadurch gekennzeichnet, dass** die Kernschicht eine Dichte zwischen 0,2 g/cm³ und 0,8 g/cm³ aufweist.

7. Polyethylen-Coextrusionsfolie nach einem der Ansprüche 1 bis 6, **dadurch gekennzeichnet, dass** die Dicke der aufgeschäumten Kernschicht zwischen 40 % und 70 % der Gesamtdicke beträgt.

8. Polyethylen-Coextrusionsfolie nach einem der Ansprüche 1 bis 6, **dadurch gekennzeichnet, dass** die Polymerkomponente der Kernschicht als Hauptbestandteil ein lineares Polyethylen, einschließlich mit Metallocen-Katalysatoren gewonnene Typen enthält.

9. Polyethylen-Coextrusionsfolie nach Anspruch 8, **dadurch gekennzeichnet, dass** die Polymerkomponente der Kernschicht neben dem linearen Polyethylen zumindest ein weiteres Polyethylen niedriger Dichte enthält.

10. Polyethylen-Coextrusionsfolie nach einem der Ansprüche 1 bis 9, **dadurch gekennzeichnet, dass** die Außenschichten unmittelbar an gegenüberliegenden Seiten an die Kernschicht angrenzen.

11. Polyethylen-Coextrusionsfolie nach einem der Ansprüche 1 bis 10, **dadurch gekennzeichnet, dass** zumindest eine der Außenschicht Farbpartikel enthält.

12. Polyethylen-Coextrusionsfolie nach einem der Ansprüche 1 bis 11, **dadurch gekennzeichnet, dass** die zweite Außenschicht eine matte Oberfläche mit einem Reflektometerwert gemäß DIN 67530 bei einem Messwinkel von 85° von weniger als 40 aufweist.

## Claims

1. A coextruded polyethylene film, particularly for packaging, with a thickness between 20 µm and 250 µm comprising a foamed core layer between a first unfoamed heat-sealable outer layer and a second unfoamed outer layer, wherein the core layer comprises a polyethylene or a polyethylene-based mixture as a polymer component having a melt mass-flow rate (MFR) according to DIN ISO EN 1133 of greater than 5 g/10 min at 190 °C and 2.16 kg, **characterised in that** the core layer and the unfoamed outer layers are formed jointly by blown film coextrusion, and **in that** the core layer contains particles, wherein the proportion of the particles is between 5 and 50 wt.%.

2. The coextruded polyethylene film according to claim 1, **characterised in that** the first and the second outer layer each have a polyethylene or a polyethylene-based mixture as a polymer component, wherein the polymer components of the first outer layer and of the second outer layer each have a melt mass-flow rate (MFR) according to DIN ISO EN 1133 of less than 3 g/10 min, in particular less than 1 g/10 min at 190 °C and 2.16 kg.

3. The coextruded polyethylene film according to claim 1 or 2, **characterised in that** the first outer layer has a higher melt mass-flow rate (MFR) than the second outer layer.

4. The coextruded polyethylene film according to any one of claims 1 to 3, **characterised in that** the foamed core layer has closed cells filled with nitrogen or carbon dioxide.

5. The coextruded polyethylene film according to any one of claims 1 to 4, **characterised in that** the foamed core layer has closed cells with a volume of less than 50000 µm³.

6. The coextruded polyethylene film according to any one of claims 1 to 5, **characterised in that** the core layer has a density between 0.2 g/cm³ and 0.8 g/cm³.

7. The coextruded polyethylene film according to any one of claims 1 to 6, **characterised in that** the thickness of the foamed core layer is between 40 % and 70 % of the total thickness.

8. The coextruded polyethylene film according to any one of claims 1 to 6, **characterised in that** the polymer component of the core layer contains a linear polyethylene as the main component, including types obtained with metallocene catalysts.

9. The coextruded polyethylene film according to claim 8, **characterised in that** the polymer component of the core layer contains at least one other low-density polyethylene besides the linear polyethylene.

10. The coextruded polyethylene film according to any one of claims 1 to 9, **characterised in that** the outer layers are immediately adjacent to the core layer on opposite sides.

11. The coextruded polyethylene film according to any one of claims 1 to 10, **characterised in that** at least one of the outer layers contains coloured particles.

12. The coextruded polyethylene film according to any one of claims 1 to 11, **characterised in that** the second outer layer has a matte surface with a reflectometer value according to DIN 67530 of less than 40 at an angle of measurement of 85°.

## Revendications

1. Film de coextrusion en polyéthylène, destiné en particulier à des emballages, ayant une épaisseur de 20 µm à 250 µm, comprenant une couche centrale moussante entre une première couche extérieure thermoscellable non moussante et une seconde couche extérieure non moussante, la couche centrale présentant comme composant polymère un polyéthylène ou un mélange à base de polyéthylène qui présente une vitesse d'écoulement de masse de coulée (MFR) conforme à DIN ISO EN 1133 de plus de 5 g/10 minutes à 190 °C et 2,16 kg, **caractérisé en ce que** la couche centrale et les couches extérieures non moussantes sont constituées ensemble par coextrusion de film soufflé et que la couche centrale contient des particules, la teneur en particules se situant entre 5 et 50 % en poids.

2. Film de coextrusion en polyéthylène selon la revendication 1, **caractérisé en ce que** la première et la seconde couche extérieure présentent respectivement en tant que composant polymère un polyéthylène ou un mélange à base de polyéthylène, les composants polymères de la première couche extérieure et de la seconde couche extérieure présentant respectivement une vitesse d'écoulement de masse de coulée (MFR) conforme à DIN ISO EN 1133 de moins de 3 g/10 minutes, en particulier moins de 1 g/10 minutes à 190 °C et 2,16 kg.

3. Film de coextrusion en polyéthylène selon la revendication 1 ou 2, **caractérisé en ce que** la première couche extérieure présente une vitesse d'écoulement de masse de coulée (MFR) plus élevée que la seconde couche extérieure.

4. Film de coextrusion en polyéthylène selon une des revendications 1 à 3, **caractérisé en ce que** la couche centrale moussante présente des cavités remplies d'azote ou de dioxyde de carbone.

5. Film de coextrusion en polyéthylène selon une des revendications 1 à 4, **caractérisé en ce que** la couche centrale moussante présente des cavités fermées ayant un volume de moins de 50 000 µm³.

6. Film de coextrusion en polyéthylène selon une des revendications 1 à 5, **caractérisé en ce que** la couche centrale présente une densité de 0,2 g/cm³ à 0,8 g/cm³.

7. Film de coextrusion en polyéthylène selon une des revendications 1 à 6, **caractérisé en ce que** l'épaisseur de la couche centrale moussante représente 40 % à 70 % de l'épaisseur globale.

8. Film de coextrusion en polyéthylène selon une des revendications 1 à 6, **caractérisé en ce que** le composant polymère de la couche centrale contient comme composante principale un polyéthylène linéaire, incluant des types obtenus avec des catalyseurs de métallocène.

9. Film de coextrusion en polyéthylène selon la revendication 8, **caractérisé en ce que** le composant polymère de la couche centrale contient, outre le polyéthylène linéaire, au moins un autre polyéthylène de plus faible densité.

10. Film de coextrusion en polyéthylène selon une des revendications 1 à 9, **caractérisé en ce que** les couches extérieures jouxtent directement la couche centrale sur des faces opposées.

11. Film de coextrusion en polyéthylène selon une des revendications 1 à 10, **caractérisé en ce qu'**au moins une des couches extérieures contient des particules colorées.

12. Film de coextrusion en polyéthylène selon une des revendications 1 à 11, **caractérisé en ce que** la seconde couche extérieure présente une surface mate ayant une valeur de réflectométrie selon la DIN 67530, avec un angle de mesure de 85°, de moins de 40.
